# EUROPEAN PATENT SPECIFICATION

(11) **EP 2 655 221 B1**
(45) Date of publication and mention of the grant of the patent: **11.02.2015**
(21) Application number: 11813590.4
(22) Date of filing: 21.12.2011
(51) Int. Cl.: B65G 1/04, B65G 1/137

(54) **SYSTEM AND METHOD FOR BUFFERING PIECES OF LUGGAGE**
SYSTEM UND VERFAHREN ZUM PUFFERN VON GEPÄCKSTÜCKEN
SYSTÈME ET PROCÉDÉ POUR FAIRE TRANSITER DES BAGAGES

(30) Priority: 22.12.2010 NL 2005893
(43) Date of publication of application: 30.10.2013
(73) Proprietor: Vanderlande Industries B.V., 5466 RB Veghel (NL)
(72) Inventor: BOSSINK, Gerardus Johannes, NL-6604 EE Wijchen (NL); VOS, Antonius Laurentius Petrus, NL-5616 RZ Eindhoven (NL)
(74) Representative: Algemeen Octrooi- en Merkenbureau B.V.
(86) International application number: PCT/NL2011/050884
(87) International publication number: WO 2012/087137

(56) References cited:
- EP-A1- 0 678 461
- EP-A1- 1 091 895
- WO-A1-2005/002999
- WO-A1-2008/094033
- WO-A1-2009/127383
- DE-A1- 4 220 117

## Description

The present invention relates to a system according to the preamble of claim 1.

Such a system is known from International patent application WO 2005/002999 A1. In this system, use is made of so-called trays which carry individual pieces of luggage. Said trays carrying pieces of luggage are presented to a sorting device for subsequent storage at a storage position of a rack in the very trays in which they were presented to the sorting device. As soon as a piece of luggage must become available for transport to an aeroplane, the tray carrying the piece of luggage in question is removed from the storage position again and subsequently carried off to the plane in question on said tray. The known system is used for the temporary storage of pieces of luggage that arrive at an airport relatively long before the scheduled flight for the piece of luggage in question. An important aspect in that regard is furthermore the fact that, also from the viewpoint of labour conditions, use is increasingly made of automated or at least mechanised loading systems for loading aeroplanes, which systems can be employed more effectively if all the luggage for a particular flight can be presented to the loading system within a relatively short period, so that the loading system can be quickly utilised again for loading an aeroplane for another flight. This advantage for that matter obtains also in the situation in which an aeroplane is still loaded manually. At present luggage frequently arrives little by little at an aeroplane, as it were, so that technical facilities such as chutes and luggage carts must remain available for a relatively long period of time. These facilities are thus not used efficiently, so that a large number of such facilities are needed for loading the various aeroplanes at an airport. In the light of the foregoing there is therefore a need for temporary storage of pieces of luggage at airports and making said pieces of luggage available for being loaded on a plane in a concentrated manner. The system as described above meets that need, but it can only be used in a cost-effective manner at relatively large airports, and in that sense it has already proven its worth. For smaller airports, however, the system is relatively costly owing to the use of trays and the associated transport systems, which is why it is not used there.

EP 678461 A1 describes a high-rise storage rack. In this system use is made of plates provided with a recess allowing loading and unloading of the plates using a auxiliary conveyor in a relatively easy way.

The object of the present invention is to provide an alternative system for buffering pieces of luggage that can also be used in a cost-effective way at relatively small airports. In order to accomplish that object, the system according to the invention is in the first place characterised in that the device comprises carriers associated with the racks, each carrier having a supporting surface for supporting individual pieces of luggage, which carriers can be moved between storage positions and a transfer position by the lift, each transfer position being arranged for receiving a carrier, and in that at least some of the transfer stations comprise moving means provided with a pusher element for each transfer station for pushing a buffered piece of luggage off the supporting surface of a carrier positioned at the transfer position. The invention is based on the inventive perception that it is advantageous to use carriers which are exclusively associated with the racks and which in that sense remain in or in any case in the immediate vicinity of said racks. The carriers are not used for extensive transport purposes through an airport, therefore, in contrast to the carriers used in the known luggage handling system. As a result, the number of carriers can remain limited, whilst in addition to that they can be of relatively simple design. In addition, no relatively complex and extensive conveying systems are needed for conveying trays that may or may not be loaded with pieces of luggage. Because of the use of the moving means, the carriers can remain associated with a rack and need not leave the direct vicinity thereof. The use of the pusher elements makes it possible in an efficient and reliable manner to push a buffered piece of luggage off the supporting surface of the carrier and onto the transfer position, after which the carrier in question becomes available for receiving a next piece of luggage to be buffered. In addition, the use of pusher elements makes it possible to use carriers of relatively simple and inexpensive design. The above aspects result in a significant cost price reduction, so that the system according to the invention can sooner be used in a cost-effective manner at relatively small airports.

In general, the available space can be used in an efficient manner if the moving means are at least partially accommodated within a rack.

In order to reduce the extent of human interference or even eliminate it altogether, it may be advantageous if the system comprises a supply conveying system for supplying pieces of luggage to be buffered to a transfer station.

Such a supply conveying system preferably comprises a supply conveyor. Such a supply conveyor may form part of a sorting device, for example. Within the framework of the invention, the supply conveying system may alternatively also comprise automatic guided vehicles (AGVs).

In order to realise a high degree of reliability in moving a luggage piece to be buffered from the supply conveyor onto the supporting surface of a carrier at the transfer position, it is preferable if the supporting surface of a carrier positioned at a transfer position is located at the same vertical level as the conveying surface of the supply conveyor.

A simple but reliable manner of transferring a piece of luggage from the supply conveyor to a transfer position can be obtained if the system comprises further moving means for moving pieces of luggage to be buffered directly present on the supply conveyor off said supply conveyor and onto or at least in the direction of the transfer position, in particular if said further moving means comprise further pusher elements for pushing pieces of luggage to be buffered directly present on the supply conveyor off the supply conveyor and onto or at least in the direction of the transfer position.

A very reliable transfer of pieces of luggage to be buffered from the supply conveyor to a transfer station can be realised if the supply conveyor is made up of a train of sorting units that can be conveyed along an endless conveying path, which sorting units each comprise a further carrier, each carrier having a further supporting surface for directly supporting an individual piece of luggage. Such sorting units are inter alia described in International patent application WO 2008/094033 A1 and in European patent application EP 2 052 682 A2.

If sorting units as described in the preceding paragraph are used, it is furthermore preferable if the aforementioned further pusher elements form part of such sorting units. Thus, each sorting unit comprises a further pusher element above the associated further supporting surface, which pusher element is laterally movable relative to the conveying path, in the direction of the transfer conveyor, at the location of the transfer conveyor for pushing a piece of luggage to be buffered off said further supporting surface and onto or at least in the direction of the transfer station.

The further pusher elements may alternatively also take up a stationary position along the conveying path, which is in particular advantageous if, according to another possible embodiment, the supply conveyor is a belt conveyor. In order to reduce the extent of human interference, or even eliminate it altogether, it may be advantageous if the system comprises a discharge conveying system for discharging buffered pieces of luggage from a transfer station, wherein the moving means are designed to push a buffered piece of luggage onto or at least in the direction of the discharge conveying system.

Such a discharge conveying system preferably comprises a discharge conveyor. Such a discharge conveyor may form part of a sorting device, for example. Within the framework of the invention, the discharge conveying system may alternatively also comprise automatic guided vehicles (AGVs).

In order to realise a high degree of reliability in moving a buffered piece of luggage off a supporting surface of a carrier and onto the discharge conveyor at the transfer position, it is preferable if the supporting surface of a carrier positioned at a transfer position is located at the same vertical level as the conveying surface of the discharge conveyor.

With a view to (further) reducing the amount of hardware of which the system is built up, and thus the cost of such a system, it is advantageous if the discharge conveyor and the supply conveyor are made up of a common conveyor.

In order to obtain some buffering capacity for each transfer station for those situations in which a lift is not directly available for picking up a piece of luggage to be buffered from a transfer location, it is preferable if at least some of the transfer stations are provided with at least one transfer conveyor for conveying a piece of luggage to be buffered from the supply conveying system to the transfer position of the transfer station in question and/or for conveying a buffered piece of luggage from the transfer position of a transfer station to the discharge conveying system. If a supply conveyor is used; the transfer conveyors can branch off the supply conveyor, as it were.

With a view to reducing the amount of hardware of which the system is built up, and thus the cost of such a system, it is advantageous if the transfer conveyors can be driven in two opposite directions for conveying a piece of luggage to be buffered from the supply conveying system to an unloaded carrier at a transfer position of the transfer station in question and for conveying a luggage from a carrier at a transfer position of the transfer station in question to the discharge conveying system.

The transfer conveyor is preferably a belt conveyor.

With a view to achieving constructional simplicity, and thus a relatively low cost price, it is preferable if the carriers are at least substantially plate-shaped.

The carriers preferably have a flat or a slightly concave upper side forming the supporting surface. Thus it is possible in a simple manner to move pieces of luggage in horizontal direction onto the supporting surface of a carrier.

The present invention further provides a method for buffering pieces of luggage, using a system according to the invention as described in the foregoing. The method comprises the successive steps recited in claim 13.

For reasons already explained in the foregoing, it may be very advantageous if the piece of luggage to be buffered is moved off the supply conveying system, preferably off a supply conveyor thereof, during step b and/or if the buffered piece of luggage is pushed off the carrier during step j.

With regard to step b it obtains that, furthermore preferably, the piece of luggage to be buffered is moved to the supporting surface of the carrier at the transfer position of the transfer station via a transfer conveyor associated with a transfer station associated with at least one rack during step b.

With regard to step j it obtains that preferably the buffered piece of luggage is moved off the carrier, which can be realised in a very reliable manner, using relatively simple means.

With regard to step j it obtains that, furthermore preferably, the buffered piece of luggage is moved to the discharge conveying system via a transfer conveyor associated with the transfer station.

The invention will now be explained in more detail by means of a description of possible embodiments of the present invention, in which reference is made to the following schematic figures:
Figure 1 is a top plan view of a system according to the invention;
Figure 2 is a side view, along the line II-II in figure 1, of a system according to figure 1;
Figure 3 is a top plan view of an alternative embodiment of a system according to the invention.

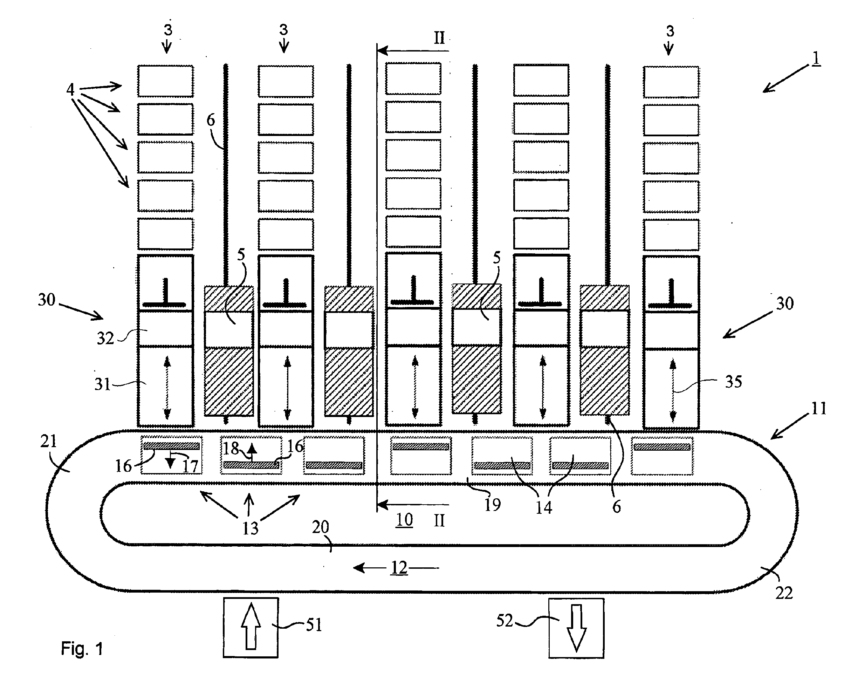

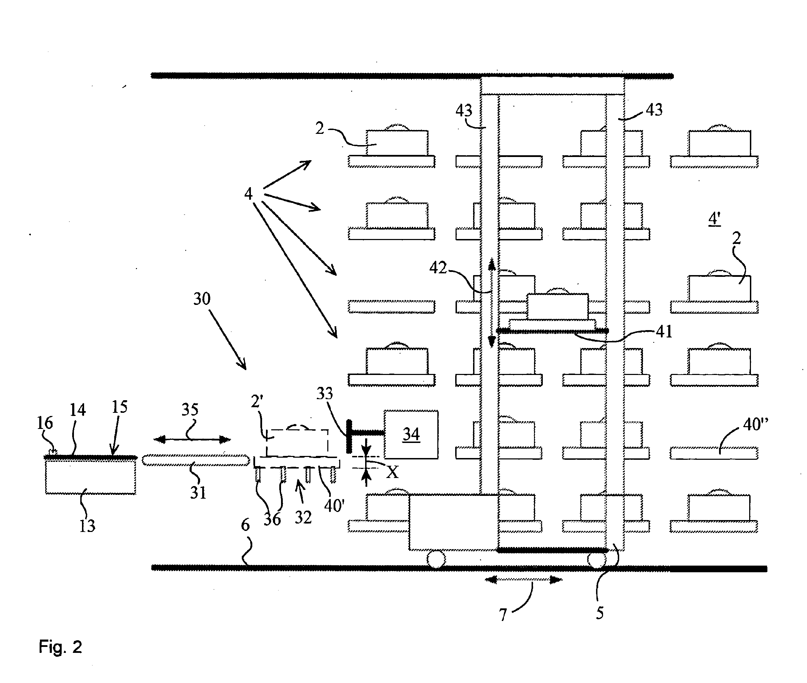

Figures 1 and 2 schematically show in two different, perpendicular views a system 1 for buffering pieces of luggage 2 (only shown in figure 2). At airports pieces of luggage, such as suitcases, bags, rucksacks and the like frequently arrive at the airport relatively well in advance of the departure time of the flight associated with the respective piece of luggage. In that case there is a need for temporary storage of the pieces of luggage in question, in which case it must be possible, of course, to make the pieces of luggage in question available in time when the departure time of the flight in question draws near. The system 1 provides for that need.

The system 1 comprises a number of racks 3 arranged parallel to each other. Each rack comprises storage positions 4 arranged in a regular pattern beside and above each other. Each storage position 4 is suitable for temporary storage of an individual piece of luggage 2.

Between the racks 3, the system 1 comprises lifts 5, which can each be moved forward and backward along paths of movement 6 between the racks 3 in question, as indicated by the double arrow 7.

The system 1 further comprises a sorting device 10, which forms part of a conveying system both for supplying pieces of luggage 2 to be buffered to the racks 3 and for discharging buffered pieces of luggage from the racks 3. For a detailed description of the sorting device 10, reference is made to International patent application WO 2008/094033 A1. Within the framework of the present invention, it suffices to say that the sorting device 10 is provided with a main conveyor 11 made up of an endless train of sorting units 13 which can be conveyed along an endless conveying path 12. The successive sorting units 13 are pivotally interconnected about vertical pivot axes, so that the train can pass through bends. Each sorting unit 13 has a carrier 14, for example configured as a flat plate, with a supporting surface 15 for supporting an individual piece of luggage 2 present at the upper side thereof. Each sorting unit 13 further comprises, just above the supporting surface 15, a pusher beam 16 which can be moved forward and backward along the associated supporting surface 15, between the two positions shown in figure 1 for the various sorting units 13, as indicated by the arrows 17, 18. A piece of luggage 2 present on a supporting surface 15 that might lie in the path of the pusher beam 16, will be pushed off the supporting surface 15, in the direction indicated by the respective arrow 17, 18, by the pusher beam 16.

The endless conveying path 12 comprises two opposing, parallel, straight sections 19, 20 and two opposing 180 degree bends 21, 22 connecting the straight sections 19, 20. The exact form of the endless conveying path 12 is not essential within the framework of the invention. Thus, the endless conveying path will usually comprise at least four 90 degree bends in practice. The racks 3 are provided on the outer side of the endless conveying path 12, their longitudinal direction extending perpendicularly to the straight section 19 of the conveying path.

Between each rack 3 and the straight conveying path section 19, the system 1 comprises a transfer station 30. Seen from the straight conveying path section 19, each transfer stations 30 comprises a belt conveyor 31, a transfer position 32 and a pusher element 33 which may, at least substantially so, be configured as a pusher beam 16. The pusher element 33, together with driving means 34 provided for moving the pusher element 33 forward and backward in horizontal direction, takes up the space of a storage position 4 of the associated rack 3, which storage position is thus not available for the storage of an individual piece of luggage 2 (see figure 2). The belt conveyor 31 can be driven in two directions as indicated by the double arrow 35. The transfer position 32 in fact consists, at least substantially so, of a number of girders 36 extending parallel to each other in horizontal direction, parallel to the straight section 19. The upper sides of the girders 36 are located below the level of the upper side of the belt conveyor 31, being spaced therefrom by a distance X.

The buffer system 1 further comprises carriers configured as slightly concave boards 40, which in fact may be configured as planks, for example. The height/thickness of said boards 40 approximately equals the distance X. In principle a board 40 is provided for each storage position. The boards 40, on which a piece of luggage 2 may or may not be present, can be moved up and down by means of a lift 5 between a transfer position 32 and a storage position 4. In figure 2 a board 40' with a piece of luggage 2' present thereon is illustrated in broken lines at the transfer position 32.

The lift 5 is provided with a lift element 41 for moving the board 40, which lift element can be moved up and down along columns 43 of the lift 5 as indicated by the double arrow 42. Each lift element comprises arms (not shown) which are known per se, which arms can be moved out from under a board 40, whereupon the board 40 in question, on which a piece of luggage 2 may be present, can be picked up by the lift element 41 by moving the lift element 41 slightly upwards. At the transfer position 32, the arms project between the girders 36. The arms of each lift element 41 can be extended in two different opposite directions, so that all storage positions 4 associated with the two racks 3 between which the lift 5 can move, as well as the two transfer positions 32 of the two associated transfer stations 30, are within reach of the lift 5.

The buffer system 1 can be used as follows: a piece of luggage 2 to be buffered is supplied to a sorting unit 13 of the sorting device 10 by means of a supply conveyor 51. The piece of luggage 2 to be buffered, lying on the flat board 14 of the sorting unit 2 three, is conveyed along the endless conveying path 12, past the various transfer stations 30, by the main conveyor 11. The pusher beam 16, controlled by the control system of the system 1, is located on the inner side of the endless conveying path 12, as is for example shown in figure 1 for the sorting unit 13, in this case the second sorting unit 13.

The control system of the system 1 has reserved a storage position 4 for the piece of luggage 2 to be buffered, and at the transfer station 30 associated with the rack 3 of which the storage position 4 forms part, the pusher beam 16 of the sorting unit 13 on which the piece of luggage 2 to be buffered is present is controlled to move in the direction indicated by the arrow 18. During said movement, the piece of luggage to be buffered is pushed onto the belt conveyor 31 of the transfer station 30 in question. It is noted in this regard that, as is shown in figure 2, the supporting surface 15 of the carrier 14 of the sorting unit 13 in question and the upper side of the belt conveyor 31 lie at the same vertical level, so that the transfer of the piece of luggage 2 to be buffered from the main conveyor 11 to the belt conveyor 13 can take place smoothly. The belt conveyor 31 conveys the piece of luggage 2 to be buffered onward, to the right in figure 2, so that it is moved onto an empty board 40 supported by the girders 36 of the transfer position 32. Said board 40 with the piece of luggage 2 to be buffered present thereon is subsequently picked up by the lift element 41, whereupon the lift 5 moves to a position in which the lift 5 is positioned opposite the reserved storage position, to the right in figure 2. Said reserved storage position is indicated at 4' in figure 2. Simultaneously therewith, or subsequently, the lift element 41 moves upward until the lift element 41 is positioned directly opposite the reserved storage position 4'. Each storage position 4 is provided with supports on which the board 40 can be supported, which supports are not shown but which are known to those skilled in the art. The board 40 with the piece of luggage 2 to be buffered present thereon is moved in the direction of the storage position 4' by extending the arms of the lift element 41. The lift element 41 is in that situation positioned at a height such that the underside of the board 40 extends just above the supports associated with the storage position 4'. By slightly lowering the lift element 41 after the arms of the lift element 41 have been extended, the board 40 with the piece of luggage 2 to be buffered present thereon is taken over by the rack 3 at the storage position 4 in question. The arms of the lift element 41 are now retracted again. Following that, the lift 5 can move the lift element 41 to a storage position 4 where and unloaded board 40 (one of which is indicated at 40" in figure 2) is stored. The loaded board 4 in question, or the unloaded board 40", is picked up by the lift element 41 in a manner which, based on the foregoing, will be obvious to the skilled person, and delivered at the storage position 32. The unloaded board 40" is subsequently available for receiving a next piece of luggage 2 to be buffered from the main conveyor 11, in a manner as described in the foregoing.

After the arms of the lift element 41 have been retracted as described above, the lift 5 can also move the lift element 41 to a storage position where a loaded board 40 is stored if the piece of luggage 2 present on the board 40 in question must be made available, as will in particular because if the time of the flight for the piece of luggage 2 in question is approaching. The board 40 carrying the buffered piece of luggage 2 in question is then removed from the rack 3 in question by means of the lift 5 and taken to the transfer position 32. At said transfer position, the pusher element 33 pushes the buffered piece of luggage 2 off the board 40 onto the belt conveyor 31, which conveys the buffered piece of luggage 2 onward to the left, seen in figure 2, so as to move it on onto and unloaded carrier 14 of a passing sorting unit 13. The control system of the buffer system 1 ensures that the pusher beam 16 of the sorting unit 13 in question is located on the inner side of the endless conveying path 12. The main conveyor 11 then conveys the buffered piece of luggage 2 further along the endless conveying path 12. As soon as the sorting unit 13 passes the discharge conveyor 52, the pusher beam 16 is activated to move in the direction indicated by the arrow 18 toward the outer side of the endless conveying path 12, during which movement the buffered piece of luggage 2 is pushed off the carrier 14 and onto the discharge conveyor 52. The discharge conveyor 52 forms part of a conveying system, via which the buffered piece of luggage 2 is conveyed to the aeroplane for the flight in question.

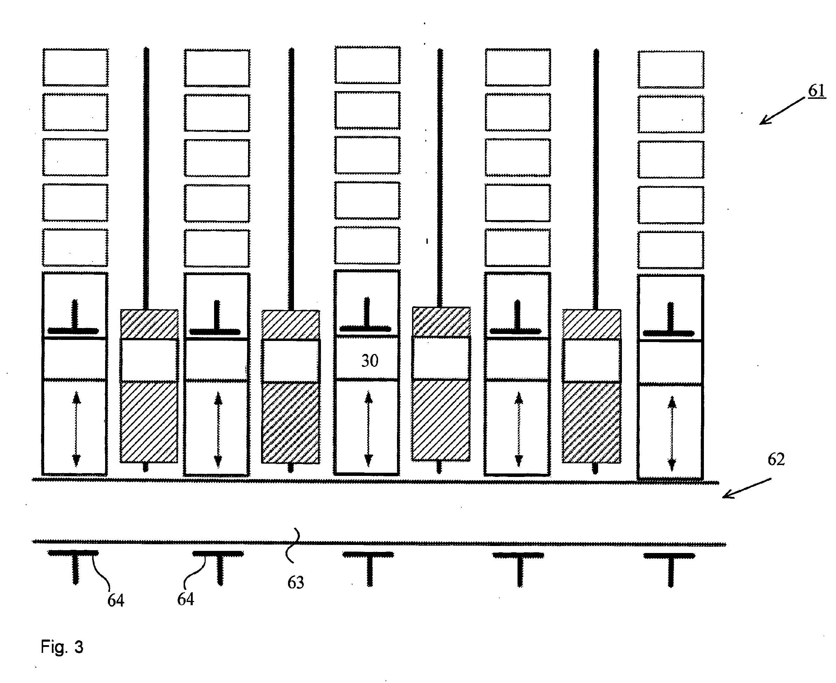

Figure 3 shows an alternative system 61 according to the invention. The buffer system 61 is essentially only different from the buffer system 1 shown in figures 1 and 2 as regards the configuration of the sorting device. As it is, the buffer system 61 comprises a sorting device 62 having a main conveyor 63 configured as a belt conveyor. A number of stationary pusher elements 64 are provided along the belt conveyor 63, directly opposite each transfer station 30 on the other side of the belt conveyor 63. By activating a pusher element 64 during the passage of a piece of luggage to be buffered present on the belt conveyor 62, the respective piece of luggage 2 to be buffered can be transferred to a transfer station 30. For the rest the operation of the buffer system 61 is quite similar to that of the buffer system 1.

Both systems shown in figures 1-3 make use of a main conveyor 11, via which the supply of pieces of luggage to be buffered as well as the discharge of buffered pieces of luggage takes place. Alternatively it is also possible to make use of a separate supply conveyor and a separate discharge conveyor. The discharge conveyor might in that case be positioned at the opposite ends of the racks 3, or at a different vertical level than the supply conveyor. In another alternative embodiment, no use is made of a conveyor for supplying and discharging pieces of luggage, instead of that automatic guided vehicles (AGVs) are used.

## Claims

1. A system (1) for buffering pieces of luggage (2), comprising a number of racks (3) arranged parallel to each other, each rack comprising storage positions (4) arranged beside and above each other for pieces of luggage, a number of lifts (5) which are movable along paths of movement (6) between adjacent racks (3) both for transferring a piece of luggage to be buffered to a storage position (4) and for picking up a buffered piece of luggage from a storage position (4), a number of transfer stations (30), each comprising at least one transfer position (32) positioned along part of a path of movement of at least one lift (5) for presenting pieces of luggage to be buffered to a lift (5) at a transfer position (32) and/or for picking up a buffered piece of luggage from a lift (5), **characterised in that** the system comprises carriers (40) associated with the racks (3), each carrier (40) having a supporting surface for supporting an individual piece of luggage, which carriers (40) can be moved between storage positions (4) and a transfer position (32) by the lift (5), each transfer position (32) being arranged for receiving a carrier (40), and **in that** at least some of the transfer stations (30) comprise moving means (34) provided with a pusher element (33) for each transfer station (30) for pushing a buffered piece of luggage off the supporting surface of a carrier (40) positioned at the transfer position (32).

2. A system according to claim 1, **characterised in that** the moving means (34) are at least partially accommodated within a rack (3).

3. A system according to claim 1 or 2, **characterised in that** the system comprises a supply conveying system for supplying pieces of luggage to be buffered to a transfer station (30), the supply conveying system comprising a supply conveyor (11; 62).

4. A system according to claim 3, **characterised in that** the supporting surface of a carrier (40) positioned at a transfer position (32) is located at the same vertical level as the conveying surface of the supply conveyor (11;62)

5. A system according to claim 4, **characterised in that** the system comprises further moving means for moving pieces of luggage to be buffered directly present on the supply conveyor (11;62) off said supply conveyor (11;62) and onto or at least in the direction of the transfer position (32), said further moving means preferably comprising further pusher elements (16;64) for pushing pieces of luggage to be buffered directly present on the supply conveyor (11;62) off the supply conveyor (11;62) and onto or at least in the direction of the transfer position (32).

6. A system according to any one of claims 4 or 5, **characterised in that** the supply conveyor (11) is made up of a train of sorting units (13) that can be conveyed along an endless conveying path (12), which sorting units each comprise a further carrier (14), each carrier having a further supporting surface (15) for directly supporting an individual piece of luggage, each sorting unit (13) preferably comprising a further pusher element (16) above the associated further supporting surface (15), which pusher element (16) is laterally movable relative to the conveying path (12), in the direction of a transfer conveyor (31), at the location of the transfer conveyor (31) for pushing a piece of luggage to be buffered off said further supporting surface (15) and onto or at least in the direction of the transfer station (30).

7. A system according to any one of the preceding claims **characterised in that** the system comprises a discharge conveying system (11;62) for discharging buffered pieces of luggage from a transfer station (30), wherein the moving means (34) are designed to push a buffered piece of luggage onto or at least in the direction of the discharge conveying system (11;62).

8. A system according to claim 7, **characterised in that** the discharge conveying system comprises a discharge conveyor (11; 62), and **in that** the supporting surface of a carrier (40) positioned at a transfer position (32) is located at the same vertical level as the conveying surface of the discharge conveyor (11;62).

9. A system according to claim 4 and claim 8, **characterised in that** the discharge conveyor and the supply conveyor are made up of a common conveyor (11; 62).

10. A system according to claim 3 and claim 7, **characterised in that** at least some of the transfer stations (30) are provided with at least one transfer conveyor (31) for conveying a piece of luggage to be buffered from the supply conveying system (11;62) to the transfer position (32) of the transfer station (30) in question and/or for conveying a buffered piece of luggage from the transfer position (32) of a transfer station (30) to the discharge conveying system (11;62), and preferably **in that** the transfer conveyors (31) can be driven in two opposite directions (35) for conveying a piece of luggage to be buffered from the supply conveying system (11;62) to an unloaded carrier (40) at a transfer position (32) of the transfer station (30) in question and for conveying a buffered piece of luggage from a carrier (40) at a transfer position (32) of the transfer station (30) in question to the discharge conveying system (11;62).

11. A system according to any one of the preceding claims, **characterised in that** the carriers (40) are at least substantially plate-shaped.

12. A system according to any one of the preceding claims, **characterised in that** the carriers (40) have a flat or a slightly concave upper side forming the supporting surface.

13. A method for buffering pieces of luggage, using a system according to any one of the preceding claims, comprising the successive steps of
a supplying a piece of luggage to be buffered by means of a supply conveying system (11;62),
b selectively moving the piece of luggage to be buffered off the supply conveying system (11;62) to the supporting surface of a carrier (40) at a transfer position (32) of a transfer station (30),
c picking up a carrier (40) with the piece of luggage to be buffered present on the supporting surface thereof from the transfer position (32), using a movable lift (5),
d moving the carrier (40) with the piece of luggage to be buffered present on the supporting surface thereof to a storage position (4) of a rack (3) by means of the lift (5),
e transferring the carrier (40) with the piece of luggage to be buffered present on the supporting surface thereof to the storage position (4) by means of the lift (5),
f keeping the piece of luggage buffered at the storage position (4), with the piece of luggage present on the supporting surface of the carrier (40),
g picking up the carrier (40) with the buffered piece of luggage present on the supporting surface thereof from the storage position (4) on demand, using a lift (5),
h moving the carrier (40) with the buffered piece of luggage present on the supporting surface thereof to a transfer station (30) by means of the lift (5),
i transferring the carrier (40) with the buffered piece of luggage present on the supporting surface thereof to the transfer position (32) of the transfer station (30) by means of the lift (5),
j pushing the buffered piece luggage off the supporting surface of a carrier (40) positioned at the transfer position (32) in the direction of a discharge conveying system (11;62), using moving means (34).

14. A method according to claim 13, **characterised in that** during step b the piece of luggage to be buffered is moved to the supporting surface of the carrier (40) at the transfer position (32) of the transfer station (30) via a transfer conveyor (31) associated with a transfer station (30) associated with at least one rack (3).

15. A method according to claim 13 or 14, **characterised in that** during step j the buffered piece of luggage is moved to the discharge conveying system (11;62) via a transfer conveyor (31) associated with the transfer station.

## Patentansprüche

1. System (1) zum Zwischenlagern von Gepäckstücken (2), mit mehreren Regalen (3), die parallel zueinander angeordnet sind, wobei jedes Regal Lagerpositionen (4) umfasst, die für Gepäckstücke neben- und übereinander angeordnet sind, mehreren Aufzügen (5), die längs von Bewegungsbahnen (6) zwischen benachbarten Regalen (3) bewegbar sind, um sowohl ein zwischenzulagerndes Gepäckstück in eine Lagerposition (4) zu überführen als auch ein zwischengelagertes Gepäckstück aus einer Lagerposition (4) hochzunehmen, mehreren Übergabestationen (30), die jeweils wenigstens eine Übergabeposition (32) aufweisen, die längs eines Teils einer Bewegungsbahn wenigstens eines Aufzugs (5) positioniert ist, um zwischenzulagernde Gepäckstücke an einer Übergabeposition (32) einem Aufzug (5) zu präsentieren und/oder um ein zwischengelagertes Gepäckstück aus einem Aufzug (5) hochzunehmen, **dadurch gekennzeichnet, dass** das System Träger (40) umfasst, die den Regalen (3) zugeordnet sind, wobei jeder Träger (40) eine Auflagefläche zum Tragen eines einzelnen Gepäckstücks hat, wobei die Träger (40) von dem Aufzug (5) zwischen Lagerpositionen (4) und einer Übergabeposition (32) bewegt werden können, wobei jede Übergabeposition (32) zur Aufnahme eines Trägers (40) eingerichtet ist, und dass wenigstens einige der Übergabestationen (30) Bewegungsmittel (34) umfassen, die mit einem Schieberelement (33) für jede Übergabestation (30) versehen sind, um ein zwischengelagertes Gepäckstück von der Auflagefläche eines Trägers (40), der an der Übergabeposition (32) positioniert ist, herunter zu schieben.

2. System nach Anspruch 1, **dadurch gekennzeichnet, dass** die Bewegungsmittel (34) wenigstens teilweise innerhalb eines Regals (3) untergebracht sind.

3. System nach Anspruch 1 oder 2, **dadurch gekennzeichnet, dass** das System ein Zuführfördersystem zum Zuführen von zwischenzulagernden Gepäckstücken zu einer Übergabestation (30) umfasst, wobei das Zuführfördersystem einen Zuführförderer (11; 62) umfasst.

4. System nach Anspruch 3, **dadurch gekennzeichnet, dass** sich die Auflagefläche eines Trägers (40), der an einer Übergabeposition (32) positioniert ist, auf dem gleichen vertikalen Niveau wie die Förderfläche des Zuführförderers (11; 62) befindet.

5. System nach Anspruch 4, **dadurch gekennzeichnet, dass** das System weitere Bewegungsmittel umfasst, um zwischenzulagernde Gepäckstücke, die direkt auf dem Zuführförderer (11; 62) vorhanden sind, von dem Zuführförderer (11; 62) herunter und auf die oder wenigstens in Richtung der Übergabeposition (32) zu bewegen, wobei die weiteren Bewegungsmittel vorzugsweise weitere Schieberelemente (16; 64) umfassen, um zwischenzulagernde Gepäckstücke, die direkt auf dem Zuführförderer (11; 62) vorhanden sind, von dem Zuführförderer (11; 62) herunter und auf die oder wenigstens in Richtung der Übergabeposition (32) zu schieben.

6. System nach einem der Ansprüche 4 oder 5, **dadurch gekennzeichnet, dass** der Zuführförderer (11) aus einer Folge von Sortiereinheiten (13) besteht, die entlang einer Endlosförderbahn (12) befördert werden können, wobei die Sortiereinheiten jeweils einen weiteren Träger (14) umfassen, wobei jeder Träger eine weitere Auflagefläche (15) zum direkten Tragen eines einzelnen Gepäckstücks aufweist, wobei jede Sortiereinheit (13) vorzugsweise ein weiteres Schieberelement (16) oberhalb der zugeordneten weiteren Auflagefläche (15) umfasst, wobei das Schieberelement (16) in Richtung eines Übergabeförderers (31) an der Stelle des Übergabeförderers (31) relativ zur Förderbahn (12) seitlich bewegbar ist, um ein zwischenzulagerndes Gepäckstück von der weiteren Auflagefläche (15) herunter und auf die oder wenigstens in Richtung der Übergabestation (30) zu schieben.

7. System nach einem der vorhergehenden Ansprüche, **dadurch gekennzeichnet, dass** das System ein Abführfördersystem (11; 62) zum Abführen zwischengelagerter Gepäckstücke von einer Übergabestation (30) umfasst, wobei die Bewegungsmittel (34) so ausgeführt sind, dass sie ein zwischengelagertes Gepäckstück auf das oder wenigstens in Richtung des Abführfördersystems (11; 62) schieben.

8. System nach Anspruch 7, **dadurch gekennzeichnet, dass** das Abführfördersystem einen Abführförderer (11; 62) umfasst und dass sich die Auflagefläche eines Trägers (40), der an einer Übergabeposition (32) positioniert ist, auf dem gleichen vertikalen Niveau wie die Förderfläche des Abführförderers (11; 62) befindet.

9. System nach Anspruch 4 und Anspruch 8, **dadurch gekennzeichnet, dass** der Abführförderer und der Zuführförderer aus einem gemeinsamen Förderer (11; 62) bestehen.

10. System nach Anspruch 3 und Anspruch 7, **dadurch gekennzeichnet, dass** wenigstens einige der Übergabestationen (30) mit wenigstens einem Übergabeförderer (31) zum Befördern eines zwischenzulagernden Gepäckstücks von dem Zuführfördersystem (11; 62) in die Übergabeposition (32) der fraglichen Übergabestation (30) und/oder zum Befördern eines zwischengelagerten Gepäckstücks aus der Übergabeposition (32) einer Übergabestation (30) zu dem Abführfördersystem (11; 62) versehen sind und vorzugsweise dass die Übergabeförderer (31) zum Befördern eines zwischenzulagernden Gepäckstücks von dem Zuführfördersystem (11; 62) zu einem unbeladenen Träger (40) an einer Übergabeposition (32) der fraglichen Übergabestation (30) und zum Befördern eines zwischengelagerten Gepäckstücks von einem Träger (40) an einer Übergabeposition (32) der fraglichen Übergabestation (30) zu dem Abführfördersystem (11; 62) in zwei entgegengesetzte Richtungen (35) angetrieben werden können.

11. System nach einem der vorhergehenden Ansprüche, **dadurch gekennzeichnet, dass** die Träger (40) wenigstens im Wesentlichen plattenförmig sind.

12. System nach einem der vorhergehenden Ansprüche, **dadurch gekennzeichnet, dass** die Träger (40) eine flache oder eine leicht konkave Oberseite haben, die die Auflagefläche bildet.

13. Verfahren zum Zwischenlagern von Gepäckstücken unter Verwendung eines Systems nach einem der vorhergehenden Ansprüche, mit den aufeinander folgenden Schritten, bei denen
a mittels eines Zuführfördersystems (11; 62) ein zwischenzulagerndes Gepäckstück zugeführt wird,
b das zwischenzulagernde Gepäckstück gezielt von dem Zuführfördersystem (11; 62) weg zu der Auflagefläche eines Trägers (40) an einer Übergabeposition (32) einer Übergabestation (30) bewegt wird,
c ein Träger (40) mit dem zwischenzulagernden Gepäckstück, das auf seiner Auflagefläche vorhanden ist, unter Verwendung eines bewegbaren Aufzugs (5) aus der Übergabeposition (32) hochgenommen wird,
d der Träger (40) mit dem zwischenzulagernden Gepäckstück, das auf seiner Auflagefläche vorhanden ist, mittels des Aufzugs (5) in eine Lagerposition (4) eines Regals (3) bewegt wird,
e der Träger (40) mit dem zwischenzulagernden Gepäckstück, das auf seiner Auflagefläche vorhanden ist, mittels des Aufzugs (5) in die Lagerposition (4) überführt wird,
f das in der Lagerposition (4) zwischengelagerte Gepäckstück aufbewahrt wird, wobei sich das Gepäckstück auf der Auflagefläche des Trägers (40) befindet,
g der Träger (40) mit dem zwischengelagerten Gepäckstück, das auf seiner Auflagefläche vorhanden ist, unter Verwendung eines Aufzugs (5) auf Verlangen aus der Lagerposition (4) hochgenommen wird,
h der Träger (40) mit dem zwischengelagerten Gepäckstück, das auf seiner Auflagefläche vorhanden ist, mittels des Aufzugs (5) zu einer Übergabestation (30) bewegt wird,
i der Träger (40) mit dem zwischengelagerten Gepäckstück, das auf seiner Auflagefläche vorhanden ist, mittels des Aufzugs (5) in die Übergabeposition (32) der Übergabestation (30) überführt wird,
j das zwischengelagerte Gepäckstück von der Auflagefläche eines Trägers (40), der an der Übergabeposition (32) positioniert ist, unter Verwendung von Bewegungsmitteln (34) herunter in Richtung eines Abführfördersystems (11; 62) geschoben wird.

14. Verfahren nach Anspruch 13, **dadurch gekennzeichnet, dass** das zwischenzulagernde Gepäckstück während Schritt b an der Übergabeposition (32) der Übergabestation (30) über einen Übergabeförderer (31), der einer Übergabestation (30) zugeordnet ist, die wenigstens einem Regal (3) zugeordnet ist, zu der Auflagefläche des Trägers (40) bewegt wird.

15. Verfahren nach Anspruch 13 oder 14, **dadurch gekennzeichnet, dass** das zwischengelagerte Gepäckstück während Schritt j über einen Übergabeförderer (31), der der Übergabestation zugeordnet ist, zu dem Abführfördersystem (11; 62) bewegt wird.

## Revendications

1. Système (1) pour faire transiter des bagages (2), comprenant un nombre de râteliers (3) agencés parallèlement les uns aux autres, chaque râtelier comprenant des positions de stockage (4) agencées à côté et au-dessus les uns des autres pour des bagages, un nombre d'élévateurs (5) qui sont mobiles le long de trajets de mouvement (6) entre des râteliers adjacents (3) à la fois pour transférer un bagage transitant à une position de stockage (4) et pour ramasser un bagage transitant à partir d'une position de stockage (4), un nombre de stations de transfert (30), chacune comprenant au moins une position de transfert (32) positionnée le long d'une partie d'un trajet de mouvement d'au moins un élévateur (5) pour présenter des bagages devant transiter à un élévateur (5) à une position de transfert (32) et/ou pour ramasser un bagage transitant à partir d'un élévateur (5), **caractérisé en ce que** le système comprend des organes de support (40) associés aux râteliers (3), chaque organe de support (40) comportant une surface de support pour supporter un bagage individuel, lesquels organes de support (40) peuvent être déplacés, entre des positions de stockage (4) et une position de transfert (32), par l'élévateur (5), chaque position de transfert (32) étant agencée pour recevoir un organe de support (40), et **en ce qu'**au moins certaines des stations de transfert (30) comprennent des moyens mobiles (34) pourvus d'un élément poussoir (33) pour chaque station de transfert (30) pour pousser un bagage transitant à partir de la surface de support d'un organe de support (40) positionné à la position de transfert (32).

2. Système selon la revendication 1, **caractérisé en ce que** les moyens mobiles (34) sont au moins partiellement logés à l'intérieur d'un râtelier (3).

3. Système selon la revendication 1 ou 2, **caractérisé en ce que** le système comprend un système de transport à alimentation pour fournir des bagages devant transiter à une station de transfert (30), le système de transport à alimentation comprenant un transporteur d'alimentation (11 ; 62).

4. Système selon la revendication 3, **caractérisé en ce que** la surface de support d'un organe de support (40) positionné à une position de transfert (32) est située au même niveau vertical que la surface de transport du transporteur d'alimentation (11 ; 62).

5. Système selon la revendication 4, **caractérisé en ce que** le système comprend en outre des moyens mobiles pour déplacer des bagages devant transiter directement présents sur le transporteur d'alimentation (11 ; 62) à partir dudit transporteur d'alimentation (11 ; 62) et sur ou au moins dans la direction de la position de transfert (32), lesdits moyens mobiles supplémentaires comprenant de préférence des éléments poussoirs supplémentaires (16 ; 64) pour pousser des bagages devant transiter directement présents sur le transporteur d'alimentation (11 ; 62) à partir du transporteur d'alimentation (11 ; 62) et sur ou au moins dans la direction de la position de transfert (32).

6. Système selon une quelconque des revendications 4 ou 5, **caractérisé en ce que** le transporteur d'alimentation (11) est composé d'un train d'unités de triage (13) qui peuvent être transportés le long d'un trajet de transport sans fin (12), lesquelles unités de triage comprennent chacune un organe de support supplémentaire (14), chaque organe de support comportant une surface de support supplémentaire (15) pour supporter directement un bagage individuel, chaque unité de triage (13) comprenant de préférence un élément poussoir supplémentaire (16) au-dessus de la surface de support supplémentaire associée (15), lequel élément poussoir (16) est latéralement mobile par rapport au trajet de transport (12), dans la direction d'un transporteur à transfert (31), à l'emplacement du transporteur à transfert (31) pour pousser un bagage devant transiter à partir de ladite surface de support supplémentaire (15) et sur ou au moins dans la direction de la station de transfert (30).

7. Système selon une quelconque des revendications précédentes, **caractérisé en ce que** le système comprend un système de transport à décharge (11 ; 62) pour décharger des bagages devant transiter à partir d'une station de transfert (30), dans lequel les moyens mobiles (34) sont conçus pour pousser un bagage transitant sur le ou au moins dans la direction du système de transport à décharge (11 ; 62).

8. Système selon la revendication 7, **caractérisé en ce que** le système de transport à décharge comprend un transporteur à décharge (11 ; 62), et **en ce que** la surface de support d'un organe de support (40) positionné à une position de transfert (32) est située au même niveau vertical que la surface de transport du transporteur à décharge (11 ; 62).

9. Système selon la revendication 4 et la revendication 8, **caractérisé en ce que** le transporteur à décharge et le transporteur d'alimentation sont composés d'un transporteur commun (11 ; 62).

10. Système selon la revendication 3 et la revendication 7, **caractérisé en ce qu'**au moins certaines des stations de transfert (30) sont pourvues d'au moins un transporteur à transfert (31) pour transporter un bagage devant transiter à partir du système de transport à alimentation (11 ; 62) vers la position de transfert (32) de la station de transfert (30) en question et/ou pour transporter un bagage transitant à partir de la position de transfert (32) d'une station de transfert (30) vers le système de transport à décharge (11 ; 62), et de préférence **en ce que** les transporteurs à transfert (31) peuvent être entraînés dans deux directions opposées (35) pour transporter un bagage devant transiter à partir du système de transport à alimentation (11 ; 62) vers un organe de support à vide (40) à une position de transfert (32) de la station de transfert (30) en question et pour transporter un bagage transitant à partir d'un organe de support (40) à une position de transfert (32) de la station de transfert (30) en question vers le système de transport à décharge (11 ; 62).

11. Système selon une quelconque des revendications précédentes, **caractérisé en ce que** les organes de support (40) présentent au moins sensiblement une forme de plaque.

12. Système selon une quelconque des revendications précédentes, **caractérisé en ce que** les organes de support (40) comportent un côté supérieur plat ou légèrement concave formant la surface de support.

13. Procédé pour faire transiter des bagages, en utilisant un système selon une quelconque des revendications précédentes, comprenant les étapes successives de :
a. la fourniture d'un bagage devant transiter au moyen d'un système de transport à alimentation (11 ; 62),
b. le déplacement sélectif du bagage devant transiter à partir du système de transport à alimentation (11 ; 62) vers la surface de support d'un organe de support (40) à une position de transfert (32) d'une station de transfert (30),
c. le ramassage d'un organe de support (40) avec le bagage devant transiter présent sur la surface de support de celui-ci à partir de la position de transfert (32), en utilisant un élévateur mobile (5),
d. le déplacement de l'organe de support (40) avec le bagage devant transiter présent sur la surface de support de celui-ci vers une position de stockage (4) d'un râtelier (3) au moyen de l'élévateur (5),
e. le transfert de l'organe de support (40) avec le bagage devant transiter présent sur la surface de support de celui-ci vers la position de stockage (4) au moyen de l'élévateur (5),
f. le maintien du bagage transitant à la position de stockage (4), avec le bagage présent sur la surface de support de l'organe de support (40),
g. le ramassage de l'organe de support (40) avec le bagage transitant présent sur la surface de support de celui-ci à partir de la position de stockage (4) à la demande, en utilisant un élévateur (5),
h. le déplacement de l'organe de support (40) avec le bagage transitant présent sur la surface de support de celui-ci vers une station de transfert (30) au moyen de l'élévateur (5),
i. le transfert de l'organe de support (40) avec le bagage transitant présent sur la surface de support de celui-ci vers la position de transfert (32) de la station de transfert (30) au moyen de l'élévateur (5),
j. la poussée du bagage transitant à partir de la surface de support d'un organe de support (40) positionné à la position de transfert (32) dans la direction d'un système de transport à décharge (11 ; 62), en utilisant des moyens mobiles (34).

14. Procédé selon la revendication 13, **caractérisé en ce que**, durant l'étape b, le bagage devant transiter est déplacé vers la surface de support de l'organe de support (40) à la position de transfert (32) de la station de transfert (30) par l'intermédiaire d'un transporteur à transfert (31) associé à une station de transfert (30) associée à au moins un râtelier (3).

15. Procédé selon la revendication 13 ou 14, **caractérisé en ce que**, durant l'étape j, le bagage transitant est déplacé vers le système de transport à décharge (11 ; 62) par l'intermédiaire d'un transporteur à transfert (31) associé à la station de transfert.
